Europäisches Patentamt

European Patent Office

Office européen des brevets

(19)

(11) Veröffentlichungsnummer: **0 200 152**
A2

(12) # EUROPÄISCHE PATENTANMELDUNG

(21) Anmeldenummer: 86105632.3

(22) Anmeldetag: 23.04.86

(51) Int. Cl.⁴: **B 29 B 7/84**
B 29 C 47/76, B 29 C 47/36

(30) Priorität: 02.05.85 DE 3515785
20.08.85 DE 3529708

(43) Veröffentlichungstag der Anmeldung:
05.11.86 Patentblatt 86/45

(84) Benannte Vertragsstaaten:
CH DE FR GB IT LI

(71) Anmelder: b a r m a g Barmer Maschinenfabrik
Aktiengesellschaft
Leverkuser Strasse 65 Postfach 110 240
D-5630 Remscheid 11(DE)

(72) Erfinder: Gathmann, Egon
Schneppendahler Weg 28
D-5630 Remscheid 11(DE)

(74) Vertreter: Pfingsten, Dieter, Dipl.-Ing.
barmag Barmer Maschinenfabrik AG Leverkuser Strasse
65 Postfach 110240
D-5630 Remscheid 11(DE)

(54) Verfahren und Vorrichtung zum Entgasen von Flüssigkeiten, Polymerschmelzen und Lösungen.

(57) Die Entgasung einer Flüssigkeit, insbesondere Polymerschmelze, wird dadurch erreicht, daß die gelieferte Schmelze als dünner Schmelzefilm oder dgl. durch eine Düse in die unter geringem Druck stehende Zuführungskammer einer Zahnradpumpe ausgepreßt wird. Über Füllstandsensoren im Bereich der Einzugstaschen der Zahnradpumpe wird der Schmelzestand bestimmt und die Drehzahl der Zahnradpumpe oder Schneckenpresse so eingestellt, daß nur eine geringe Überdeckung der Zahnräder mit Schmelze vorliegt. Durch die Bewegung der Schmelze in den Einzugstaschen werden Ständig neue freie Oberflächen geschaffen und die Entgasung der Schmelze in vorteilhafter Weise unterstützt.

EP 0 200 152 A2

barmag Barmer Maschinenfabrik Aktiengesellschaft. 0200152
Sitz Remscheid, Bundesrepublik Deutschland

O-1463                             - 1 -

<u>Verfahren und Vorrichtung zum Entgasen von Flüssigkeiten,</u>
<u>Polymerschmelzen und Lösungen</u>

Die Erfindung betrifft ein Verfahren zum Entgasen von
Flüssigkeiten, vorzugsweise Polymerschmelzen und Lösungen,
für die kontinuierliche Verarbeitung von z.B. thermoplastischen Kunststoffen und eine Vorrichtung zur Durchführung des
Verfahrens.

Einige Thermoplaste weisen gewisse Anteile von monomeren,
oligomeren Lösungsmitteln und anderen flüchtigen Bestandteilen als Rückstände des Herstellungsverfahrens auf. Andere
wie z.B. Polyamide, Polymethylmethacrylate, Polykarbonat
oder gefüllte Polyolefine etc. sind sehr hygroskopisch, so
daß sie stark zur Feuchtigkeitsaufnahme neigen. Die aufgenommene Feuchtigkeit kann im Inneren des Aufgabegutes eingeschlossen oder als Oberflächenhaut adsorbiert sein bzw. in
den Zwischenbereichen des Aufgabegutes eingelagert sein.
Außerdem werden bei der Extrusion pulverförmiger Formmassen
hohe Anteile von Luft eingeschlossen. Monomere (z.B. Styrol)
und Lösungsmittel (z.B. Äthylbenzol) geben den Fertigprodukten einen unangenehmen Geruch. Ferner bestehen gesundheitliche Bedenken, da viele dieser Stoffe toxisch sind. Feuchtigkeit ist die Ursache dafür, daß beim Verarbeiten durch
Extrusion Halbzeuge entstehen, die vom Aussehen und von den
mechanischen Eigenschaften her nicht den gestellten Anforderungen entsprechen. Gründe dafür liegen darin, daß Feuchtigkeit infolge der hohen Verarbeitungstemperaturen der Grundstoffe beim Extrudieren in den gasförmigen Zustand übergeht
und am Fertigteil äußerlich sichtbar zu Blasen und Schlieren führt. Ein weiterer Grund ist der, daß einige Kunststoffe in Anwesenheit von Feuchtigkeit bei hohen Temperaturen und entsprechender Verweilzeit zum chemischen Abbau neigen.

Das Herstellen optimaler Produktqualitäten macht daher die Beseitigung der flüchtigen Bestandteile durch Entgasen vor oder während des Extrusionsprozesses erforderlich. Das Entgasen der Formmassen läßt sich durch Erwärmen des Materials und durch Erniedrigen des Partialdruckes im Raum über dem Material oder durch Evakuieren erreichen.

Für die Entgasung von Polymerschmelzen werden vielfach Einschnecken-Extruder eingesetzt. Ein Problem bei der Anwendung dieser Anlagen ist es, die Fördermenge des ersten Schneckenabschnittes und des Entgasungsbereichs so aufeinander abzustimmen, daß einerseits ein optimaler Durchsatz erreicht wird und andererseits jedoch nicht zuviel Schmelze vom ersten Schneckenabschnitt angeliefert wird, so daß der Entgasungsbereich mit Schmelze gefüllt wird und Schmelze abgesaugt werden kann.

Es sind verschiedene Vorrichtungen bekannt, die diesen Nachteil beseitigen, was zu einer wesentlichen Verteuerung der Anlage führt, z.B. verschiebbare Schnecken. Ein weiterer Nachteil beim Einsatz von Einschnecken-Extrudern ist die Bildung von Ablagerungen im teilgefüllten Entgasungsbereich der Schnecke bei längerer Verweilzeit der Schmelze im Extruder, die zu Produktionsunterbrechungen und Qualitätsminderungen des Produktes führen können. Vielfach treten auch Probleme auf, wenn mit Entgasungsextrudern ein höherer Schmelzedruck aufgebaut werden soll zur Überwindung der Druckverluste in den nachfolgenden Aggregaten wie z.B. Schmelzeleitung, Filter und Düse. Zur Lösung dieses Problems werden teilweise sehr lange Extruder eingesetzt oder Schmelzepumpen dem Extruder nachgeschaltet. Beide Lösungen sind mit erhöhten Kosten verbunden und führen zu einer zusätzlichen thermischen Belastung des Produktes.

Aufgabe der Erfindung ist es, ein Verfahren und eine Vorrichtung zum Entgasen von Flüssigkeiten, z.B. Polymerschmelzen zu schaffen, mit der die Entgasung wirkungsvoller als bisher gestaltet und die Verweilzeit der Polymerschmelze wesentlich verkürzt werden kann, wodurch thermische Schädigungen des Polymermaterials und Bildung von Ablagerungen vermindert werden können.

Die Aufgabe wird erfindungsgemäß dadurch gelöst, daß die Flüssigkeit in einem druckunabhängigen Strom unter Entspannung vorzugsweise auf weniger als 1 bar in die Zuführungskammer einer Zahnradpumpe gefördert und von dieser mit Förderrichtung im Sinne der Schwerkraft in einen Bereich höheren Druckes gefördert wird. Der Füllstand in der Zuführungskammer wird auf eine Teilfüllung ausgeregelt. Die Polymerschmelze wird von einem Extruder durch eine Drossel in die unter Unterdruck stehende Zuführungskammer einer Zahnradpumpe gefördert. Die Drossel kann eine Breitschlitz-, Ringkanal- oder Mehrlochdüse sein, deren Schlitz sich über die ganze Breite des Zahnradpaares erstreckt, wodurch die Schmelze als verbreiterter Schmelzestrahl oder Schmelzevorhang mit großer Oberfläche zur Entgasung in das Flüssigkeitsbad strömt. Die Schmelze kann direkt ins Flüssigkeitsbad, vorzugsweise jedoch in einem Abstand über dem Bad in die Zuführungskammer einströmen. Von Vorteil ist es, wenn sich die Düse senkrecht in einem Abstand über dem sich öffnenden Spalt des Zahnradpaares befindet, da dadurch eine gute Verteilung der Schmelze über den Zahnrädern erreicht wird, was zu einer großen Oberfläche und besseren Entgasung der Schmelze führt.

In einer bevorzugten Ausführung der erfindungsgemäßen Vorrichtung wird ein Druckentlastungsanschluß vorgesehen, der in einem Abstand über der Drossel liegt, um ein Ansaugen der Schmelze in den Entlastungsanschluß auszuschließen. Die Entlastung kann dadurch stattfinden, daß der vom Extruder aufgebaute hohe Druck in der Pumpenzuführungskammer auf Umgebungsdruck abgebaut wird. Vorteilhaft hat sich jedoch ein Unterdruck in der Pumpenzuführungskammer erwiesen, da dadurch eine schnellere und bessere Entgasung der Polymerschmelze erzielt werden kann. Um einen konstanten, niedrigen Füllstand (Teilfüllung der Schmelze) über den Zahnrädern zu erreichen, kann die Pumpendrehzahl verstellt oder aber die Fördermenge des Extruders verändert oder die Drossel verstellt werden.

In einem bevorzugten Ausführungsbeispiel der erfindungsgemäßen Vorrichtung speisen Füllstandssensoren, die den Druck oder die Temperatur der Polymerschmelze an der Stelle des höchsten und niedrigsten Schmelzestandes im teilgefüllten Pumpenzuführungsraum aufnehmen, eine Reglereinheit derart, daß eine dünne filmförmige Bedeckung der Zahnräder mit Schmelze erzielt wird, bei der der Flüssigkeitsspiegel auf oder unter der gemeinsamen Tangentialebene der Kopfkreise der Zahnräder eingeregelt wird. Hierdurch wird eine sehr große Oberfläche zum Entgasen der Schmelze hergestellt.

Beim Entgasen von Polymerschmelzen oder Lösungen ist im allgemeinen die Diffusion der niedermolekularen Komponente in der hochmolekularen Flüssigkeitsphase der geschwindigkeitsbestimmende Schritt. Die Modellvorstellung ist die, daß sich in der Grenzschicht des Flüssigkeitsfilms zum Gasraum sehr schnell die dem Partialdruck des flüchtigen Stoffes entsprechende Gleichgewichtskonzentration einstellt. Im Inneren des Schmelzefilms bildet sich ein Konzentrationsgefälle aus und die Diffusion der flüchtigen, niedermolekularen Komponente längs des Konzentrationsgefälles bestimmt
die Geschwindigkeit des Entgasungsvorgangs. Das praktische
Entgasungsresultat hängt weitgehend von der Ausbildung der
Polymerschmelze-Oberfläche, der Gesamtoberflächengröße und
der Dicke des Schmelzefilmes ab. Daher ist es beim Entgasen
von Polymerschmelzen wichtig, daß nur eine dünne filmförmige
Bedeckung der Zahnräder mit Schmelze gewährleistet wird, um
eine optimale Entgasung zu erzielen.

Der in der Pumpenzuführungskammer vorgegebene Partialdruck
der flüchtigen Komponente legt letztlich die erreichbare
Gleichgewichtskonzentration in der Flüssigkeitsphase fest.
Gute Ergebnisse wurden mit Drücken von weniger als 1 bar in
der Pumpenzuführungskammer erzielt. Die Bedingungen für den
Stofftransport in einem Polymerschmelzefilm sind entscheidend dafür, wie weit sich die mittlere Konzentration in der
Flüssigkeitsphase dem Gleichgewichtswert nähern kann. Als
vorteilhaft für die Entgasung erweist sich, daß die Pumpenumfangswand über einen Teil des Zahnradumfangs taschenförmige Erweiterungen (Einzugstaschen) der Zuführungskammer
bildet. Hierdurch entsteht in den Einzugstaschen ein rotierender Schmelzeknet, wodurch immer neue Oberflächen zum
Entgasen geschaffen werden. Die entgaste Polymerschmelze
wird von den umlaufenden Zahnrädern erfaßt und aus einem
Bereich niedrigen Druckes (Vakuum) in einen Bereich höheren
Druckes gefördert. Die mit Schmelze gefüllten Zahnradlücken
werden an der Austrittsseite vollständig geleert, so daß
keine stagnierenden Zonen vorhanden sind, wodurch Polymerschmelze thermisch geschädigt werden könnte. Aufgrund ihrer
konstruktiven Gegebenheiten ist es mit Hilfe der Zahnradpumpe leichter möglich, höhere Drücke an der Austrittsseite
zu erzeugen als mit einem Entgasungsextruder. Hierdurch
können Druckverluste in den nachfolgenden Schmelzeleitungen,
Filtern oder Düsen überwunden werden. Von der Zahnradpumpe
wird die entgaste Kunststoffschmelze in die Spinndüse
geliefert. Die Schmelze ist durch die erfindungsgemäße Vorrichtung sehr günstig zu entgasen durch Schaffung einer großen Oberfläche. Ein weiterer Vorteil der Entgasungsvorrichtung ist die kürzere Baulänge der Extrusionsanlage, der die Entgasungsvorrichtung nachgeschaltet wird.

Um die Viskosität der vom Extruder geförderten Polymerschmelze während des Entgasungsvorganges nicht zu ändern und damit die Fließeigenschaften der zu fördernden Masse an allen Stellen des Pumpengehäuses gleich zu halten, wird weiter vorgeschlagen, daß das Pumpengehäuse beheizbar ist, vorzugsweise zum Durchtritt eines flüssigen oder dampfförmigen Heizmittels doppelwandig ausgeführt ist.

Die Erfindung wird anhand der folgenden Zeichnung näher erläutert.
Fig. 1 zeigt in schematischer Darstellung eine Ausführungsform der erfindungsgemäßen Vorrichtung;
Fig. 2 zeigt eine abgeänderte Ausführungsform mit einer Drehzahlregelung der Liefervorrichtung in Abhängigkeit vom Füllstand in der Zuführungskammer im Gehäuse der Zahnradpumpe.

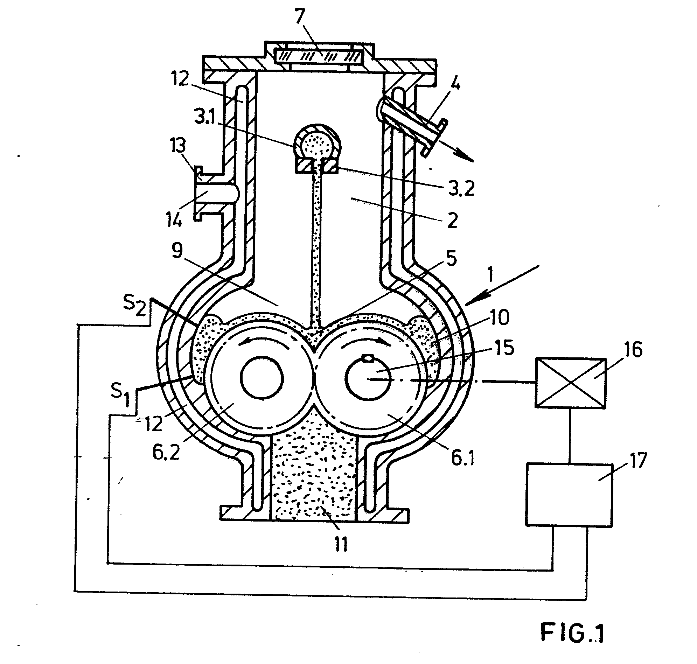

In Fig. 1 ist ein schematischer Normalschnitt der Zahnradpumpe 1 zur Entgasung von Polymerschmelzen 8 gezeigt. Welle 15 wird durch den schematisch dargestellten Motor 16 angetrieben. Auf Welle 15 sitzt drehfest das Zahnrad 6.1. Zahnrad 6.2 ist frei drehbar gelagert und wird von Zahnrad 6.1 mitgenommen. Die Drehrichtung ist durch Pfeile angezeigt.

In die Pumpenzuführungskammer 2 im Gehäuse der Zahnradpumpe 1 ist Rohr 3.1 geführt. Es weist auf seiner Unterseite einen Schlitz in Form einer Austragsdüse 3.2 auf, die senkrecht über dem sich öffnenden Spalt 5 des Zahnradpaares 6 liegt und sich im wesentlichen über die Breite der Zahnräder 6 erstreckt. Durch die Düse 3.2 strömt die Polymerschmelze 8 in die Zuführungskammer 2 der Zahnradpumpe 1, wobei der Schmelzestrahl zu einem Schmelzevorhang aufgeweitet wird. Durch einen Druckentlastungsanschluß 4 oberhalb der Düse 3 wird in der Zuführungskammer 2 ein Unterdruck erzeugt. Die Düse 3 ist mit Abstand über dem Schmelzespiegel angebracht. Sensoren S1 und S2 tasten den Schmelzespiegel ab. Das Ausgangssignal der Sensoren wird einer Reglereinheit 17 aufgegeben. Durch diese wird die Drehzahl der Zahnradpumpe 1 so gesteuert, daß ein konstanter, niedriger Füllstand der Zahnradpumpe 1 gewährleistet ist.

Durch ein Schauglas 7 kann der Füllstand optisch nachkontrolliert werden. Die Füllzone 9 ist in Umfangsrichtung der Zahnräder 6 durch Einzugstaschen 10 erweitert. Der Grund dieser Einzugstaschen 10 erstreckt sich im wesentlichen radial und ist anschließend ausgerundet. Dadurch ergibt sich in den Einzugstaschen ein rotierender Schmelzeknet, in dem ständig neue Oberflächen zum Entgasen der Schmelze 8 geschaffen werden. Die Sensoren S1 und S2 befinden sich jedenfalls unterhalb der Düse 3.2, vorzugsweise jedoch im Bereich der Einzugstaschen 10. Dadurch wird erreicht, daß sich ein nur dünner Schmelzefilm auf dem Umfang der Zahnräder 6 bildet, der gerade dick genug ist, die Zahnlücken auszufüllen.

Die Zahnradpumpe 1 fördert die entgaste Schmelze aus einem Bereich niedrigen Druckes in einen Bereich erhöhten Druckes durch den Austrittsstutzen 11, z.B. zur Spinn- oder Strangpreßdüse. Das Pumpengehäuse ist doppelwandig ausgeführt und ist von einem Hohlraum 12 umgeben. Der Hohlraum 12 kann Anschlußstutzen, z.B. Anschlußstutzen 13 mit Flansch 14, aufweisen, über die das System in bekannter Weise an einer Heizmittelquelle, beispielsweise an einem Diphylsystem, angeschlossen werden kann. Allerdings sind auch andere Beheizungsmöglichkeiten denkbar, beispielsweise mit Hilfe von elektrischen Widerstandsheizelementen.

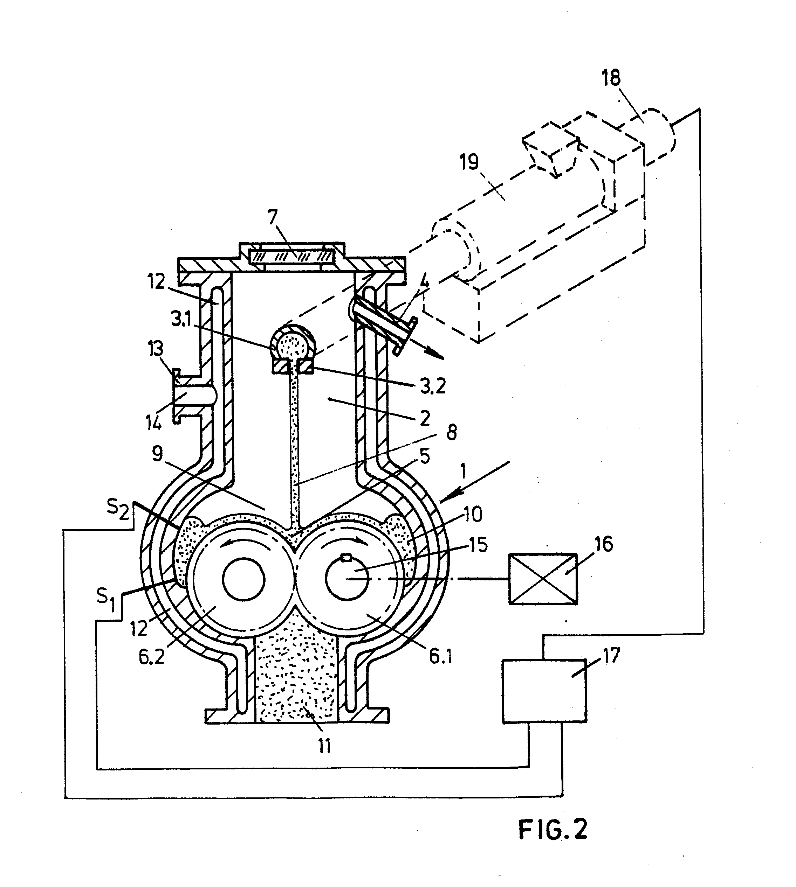

Fig. 2 zeigt eine abgeänderte Ausführungsform der Füllstandsregelung der zu entgasenden Polymerschmelze. Bei diesem Ausführungsbeispiel liefern die Sensoren S1 und S2 der Reglereinheit 17 Meßwerte für den Füllstand der Polymerschmelze 8. Die Reglereinheit 17 steuert ihrerseits den Antriebsmotor 18 und die Drehzahl einer der Zahnradpumpe 1 vorgeschalteten Liefervorrichtung 19 und damit deren Ausstoß an Polymerschmelze 8 durch die Austragsdüse 3.2, während die Zahnradpumpe 1 mit konstanter Drehzahl angetrieben ist. Die Liefervorrichtung 19 kann eine Schneckenpresse (Extruder) sein - wie dargestellt - durch die ein Polymer erschmolzen und gefördert wird. Die Liefervorrichtung 19 kann aber auch eine Pumpe, z.B. Zahnradpumpe sein, durch die eine Polymerschmelze gefördert wird.

<u>BEZUGSZEICHENAUFSTELLUNG</u>

| | |
|---|---|
| 1 | Zahnradpumpe |
| 2 | Zuführungskammer |
| 3 | Düse |
| 4 | Druckentlastungsanschluß |
| 5 | sich öffnender Spalt des Zahnradpaares |
| 6 | Zahnradpaar |
| 7 | Schauglas |
| 8 | Flüssigkeit, Polymerschmelze oder Lösung |
| 9 | Füllzone |
| 10 | Einzugstasche |
| 11 | Austrittsstutzen |
| 12 | Hohlraum |
| 13 | Anschlußstutzen |
| 14 | Flansch |
| 15 | Antriebswelle |
| 16 | Antriebsmotor |
| 17 | Reglereinrichtung |
| 18 | Antriebsmotor |
| 19 | Schneckenpresse |
| S1 | Sensor |
| S2 | Sensor |

PATENTANSPRÜCHE

1. Verfahren zum Entgasen von Flüssigkeiten, insbesondere Polymerschmelzen und Lösungen für die kontinuierliche Weiterverarbeitung,
dadurch gekennzeichnet, daß
die Flüssigkeit in einem druckunabhängigen Strom unter Entspannung, vorzugsweise auf weniger als 1 bar in die Zuführungskammer einer Zahnradpumpe gefördert und von dieser mit Förderrichtung im Sinne der Schwerkraft in einen Bereich höheren Druckes gefördert wird, und daß der Füllstand in der Zuführungskammer auf eine Teilfüllung ausgeregelt wird.

2. Verfahren nach Anspruch 1,
dadurch gekennzeichnet, daß
die Flüssigkeit unter Drosselung in die Zuführungskammer gefördert wird.

3. Verfahren nach Anspruch 1 und 2,
dadurch gekennzeichnet, daß
die Zuführungskammer der Vorrichtung einen Druckentlastungsanschluß besitzt, wodurch ein Unterdruck in der Kammer erzeugt wird.

4. Verfahren nach Anspruch 1 bis 3,
dadurch gekennzeichnet, daß
die Flüssigkeit durch eine Breitschlitz-, Ringkanal- oder Mehrlochdüse austritt, wodurch die Flüssigkeit als Flüssigkeitsfilm oder in einer Vielzahl von Teilströmen in die Zuführungskammer gefördert wird.

5. Verfahren nach einem der vorangegangenen Ansprüche, dadurch gekennzeichnet, daß der Füllstand in der Zuführungskammer durch Verstellung der Drehzahl der Fördervorrichtung (Zahnradpumpe) oder der Liefervorrichtung (Extruder) erfolgt.

6. Verfahren nach einem der vorangegangenen Ansprüche, dadurch gekennzeichnet, daß die Polymerschmelze durch eine Düse als Strahl mit verbreiterter Oberfläche in den sich öffnenden Spalt des Zahnradpaares der Fördervorrichtung eingespeist wird und die Zahnradpaare filmförmig bedeckt.

7. Verfahren nach einem der vorangegangenen Ansprüche, dadurch gekennzeichnet, daß der Einlaß der Flüssigkeit in die Zuführungskammer mit Abstand über dem eingestellten Flüssigkeitsspiegel liegt.

8. Verfahren nach einem der vorangegangenen Ansprüche, dadurch gekennzeichnet, daß an der Stelle des höchsten und niedrigsten Flüssigkeitsstandes Sensoren in die Zuführungskammer ragen, die eine Regeleinrichtung speisen, die die Drehzahl der Fördervorrichtung (Zahnradpaar) oder der Liefervorrichtung (Extruder oder Pumpe) so steuert, daß ein konstanter Füllgrad gewährleistet wird.

9. Verfahren nach einem der vorangegangenen Ansprüche, dadurch gekennzeichnet, daß die Pumpenumfangswand über einen Teil des Zahnradumfangs taschenförmige Erweiterungen (Einzugstaschen) der Zuführungskammer bildet, und daß der Flüssigkeitsspiegel auf oder unter der gemeinsamen Tangentialebene der Kopfkreise der Zahnräder eingeregelt wird.

10. Vorrichtung zur Ausführung des Verfahrens nach einem der Ansprüche 1 bis 9,
dadurch gekennzeichnet, daß
die Zuführungskammer (2) einer Zahnradpumpe (1) einen Druckentlastungs-, vorzugsweise Vakuumanschluß (4) besitzt,
und daß die Zahnradpumpe (1) oder Liefervorrichtung (Extruder) über Füllstandssensoren (S1, S2) zur Einregelung des Flüssigkeitsspiegels unterhalb des Druckentlastungsanschlusses drehzahlverstellbar ist,
und daß der Zuführungskammer (2) eine Drossel oder Düse (3) vorgeordnet ist.

11. Vorrichtung nach Anspruch 10,
dadurch gekennzeichnet, daß
die Düse (3), aus der die Flüssigkeit, Polymerschmelze oder Lösung tritt, eine Breitschlitz-, Ringkanal- oder Mehrlochdüse ist.

12. Vorrichtung nach Anspruch 10 oder 11,
dadurch gekennzeichnet, daß
die Düse (3) senkrecht über dem sich öffnenden Spalt (5) des Zahnradpaares (6) liegt.

13. Vorrichtung nach einem der vorangegangenen Ansprüche 10 bis 12,
dadurch gekennzeichnet, daß
Sensoren (S1, S2) an der Stelle des höchsten und niedrigsten Flüssigkeitsstandes in die Zuführungskammer (2) ragen.

14. Vorrichtung nach Anspruch 13,
dadurch gekennzeichnet, daß
die Sensoren (S1, S2) Temperatur- oder Drucksensoren sind.

15. Vorrichtung nach einem der vorangegangenen Ansprüche,
    dadurch gekennzeichnet, daß
    die Zahnradpumpe (1) beidseits keilförmige Einzugstaschen (10) besitzt,

    und daß der Füllstand so eingestellt ist, daß der
    Flüssigkeitsspiegel auf oder unter der gemeinsamen
    Tangentialebene der Kopfkreise der Zahnräder (6.1, 6.2)
    liegt.

FIG.1

FIG.2